# EUROPEAN PATENT APPLICATION

(11) **EP 4 505 927 A1**
(43) Date of publication of application: **12.02.2025**
(21) Application number: 23784182.0
(22) Date of filing: 24.03.2023
(51) Int. Cl.: A47L 11/24, G05D 1/02, A47L 11/40

(54) **AUTOMATIC CLEANING DEVICES, CONTROL METHOD AND STORAGE MEDIUM**

(30) Priority: 08.04.2022 CN 202210367450
(71) Applicant: Beijing Roborock Innovation Technology Co., Ltd., Beijing 102206 (CN)
(72) Inventor: LIU, Dan, Beijing 102206 (CN); XIE, Haojian, Beijing 102206 (CN); LUO, Han, Beijing 102206 (CN); ZHANG, Lei, Beijing 102206 (CN); CHEN, Ze, Beijing 102206 (CN)
(74) Representative: Studio Torta S.p.A.
(86) International application number: PCT/CN2023/083820
(87) International publication number: WO 2023/193618

(57) **Abstract**

Automatic cleaning devices, a control method and a storage medium. A cleaning device comprises : a mobile platform (100); a cleaning module (150), provided at the bottom of the mobile platform (100) and used for cleaning an operation surface on a travel path of the automatic cleaning device; a light emitting assembly (180), provided on the bottom surface of the mobile platform (100) and configured to emit optical signals within a preset angle range in the direction of the operation surface; a light receiving assembly (190), comprising a spectrum acquisition unit (191) configured to receive optical signals reflected from the operation surface and generate spectrum information based on the operation surface; and a control system (130), provided inside the mobile platform (100) and configured to determine an operation surface material and/or an operation surface stain type at least on the basis of the spectrum information, and control, on the basis of the operation surface material and/or the operation surface stain type, the cleaning module (150) to clean the operation surface. By arranging a spectrometer and/or an image formation assembly at the bottom of the automatic cleaning device, the operation surface material and/or the operation surface stain type of an operation surface is obtained.

## Description

### CROSS-REFERENCE TO RELATED APPLICATION

This application claims priority to Chinese Patent Application No. 202210367450.9 filed on April 8, 2022, the contents of which are hereby incorporated herein by reference in its entirety as part of this application.

### TECHNICAL FIELD

The present disclosure relates to the technical field of robots, and in particular to an automatic cleaning apparatus, a method for controlling the automatic cleaning apparatus , and a storage medium.

### BACKGROUND

With the development of technologies, service robots are becoming more and more common in all aspects of life, and especially the popularity of cleaning robots is increasing. However, due to the complexity of the home environment which often involves a variety of materials such as carpets, tiles, floor, etc., cleaning robots cannot accurately identify each type of ground material. For example, since the cleaning robots cannot accurately identify a carpet during sweeping and mopping process, the carpet may be wet, which may easily damage or even mildew the expensive carpet.

In addition, grease on the kitchen floor, juice, coffee, pet urine and other stubborn stains require focused cleaning by the robots. However, current cleaning robots cannot accurately identify regions with stubborn stains, and can only blindly focus on all regions after manual selection of a precision cleaning mode, so as to achieve high cleaning capacity, which reduces the cleaning efficiency.

### SUMMARY

Embodiments of the present disclosure provide an automatic cleaning apparatus, including:
a mobile platform and a drive assembly;
a cleaning module, provided at bottom of the mobile platform for cleaning an operation surface on a travelling path of the automatic cleaning apparatus;
a light emitting assembly, provided on a bottom surface of the mobile platform and configured to emit light signals within a predetermined angle range towards a direction of the operation surface;
a light receiving assembly, including a spectrum acquisition unit and configured to receive light signals reflected from the operation surface and generate spectral information based on the operation surface; and
a control system, provided inside the mobile platform and configured to determine a material and/or a stain category of the operation surface based at least on the spectral information, and control, based on the material and/or stain category of the operation surface, the cleaning module to clean the operation surface.

Embodiments of the present disclosure provide an automatic cleaning apparatus, including a processor and a memory, wherein the memory stores computer program instructions executable by the processor, and when the computer program instructions are executed by the processor, steps of any of the aforesaid method are implemented.

Embodiments of the present disclosure provide a non-transitory computer-readable storage medium storing computer program instructions therein, wherein when the computer program instructions are invoked and executed by a processor, steps of any of the aforesaid method are implemented.

### BRIEF DESCRIPTION OF THE DRAWINGS

The accompanying drawings incorporated in and constituting part of the specification illustrate embodiments of the present disclosure and serve to explain the principles of the present disclosure, together with the specification. Apparently, the accompanying drawings in the following description show merely some embodiments of the present disclosure, and a person of ordinary skill in the art may still derive other accompanying drawings from these accompanying drawings without creative efforts. In the accompanying drawings:
FIG. 1 is an overall schematic structural diagram of an automatic cleaning apparatus according to some embodiments of the present disclosure;
FIG. 2 is a schematic structural diagram of a bottom view of an automatic cleaning apparatus according to some embodiments of the present disclosure;
FIG. 3 is a schematic structural diagram of a light emitting and receiving module of an automatic cleaning apparatus according to some embodiments of the present disclosure;
FIG. 4 is a schematic diagram of spectra based on materials of operation surfaces according to some embodiments of the present disclosure;
FIG. 5 is a schematic diagram of spectra based on materials of and stains on operation surfaces according to some embodiments of the present disclosure;
FIG. 6 is a schematic flow chart of a method for controlling an automatic cleaning apparatus according to some embodiments of the present disclosure; and
FIG. 7 is a schematic structural diagram of an electronic apparatus according to some embodiments of the present disclosure.

### DETAILED DESCRIPTION

To make the objectives, technical solutions and advantages of the present disclosure clearer, the present disclosure will be further described in detail below with reference to the accompanying drawings. It is obvious that the described embodiments are only some, but not all of the embodiments of the present disclosure. All other embodiments obtained by those of ordinary skills in the art based on the embodiments in the present disclosure without creative efforts should fall within the protection scope of the present disclosure.

The terms used in the embodiments of the present disclosure are for the purpose of describing particular embodiments only and are not intended to limit the present disclosure. The singular forms "a/an", "said" and "the" used in the embodiments of the present disclosure and the appended claims are intended to include the plural forms as well, unless otherwise indicated clearly in the context. The term "a plurality of" generally includes at least two.

It is to be understood that, the term "and/or" used herein only describes an association relationship between associated objects, and indicates that there may be three kinds of relationships. For example, A and/or B may indicate three cases: A exists alone, A and B exist at the same time, and B exists alone. In addition, the character "/" herein generally indicates an "or" relationship between the contextual objects.

It is to be understood that, although the terms first, second, third, etc. may be used for descriptions in the embodiments of the present disclosure, these descriptions should not be limited to these terms. These terms are only for a distinguishing purpose. For example, "first" may also be referred to as "second" without departing from the scope of the embodiments of the present disclosure. Similarly, "second" may also be referred to as "first".

It is also to be noted that, the terms "including", "containing", or any other variants thereof are intended to cover the nonexclusive inclusion, such that a commodity or device including a series of elements includes not only those elements, but also other elements not listed explicitly or elements inherent to such a commodity or device. Without more limitations, the element defined by the phrase "including a ..." does not exclude the existence of other same elements in the commodity or device including the element.

Optional embodiments of the present disclosure will be described in detail below with reference to the accompanying drawings.

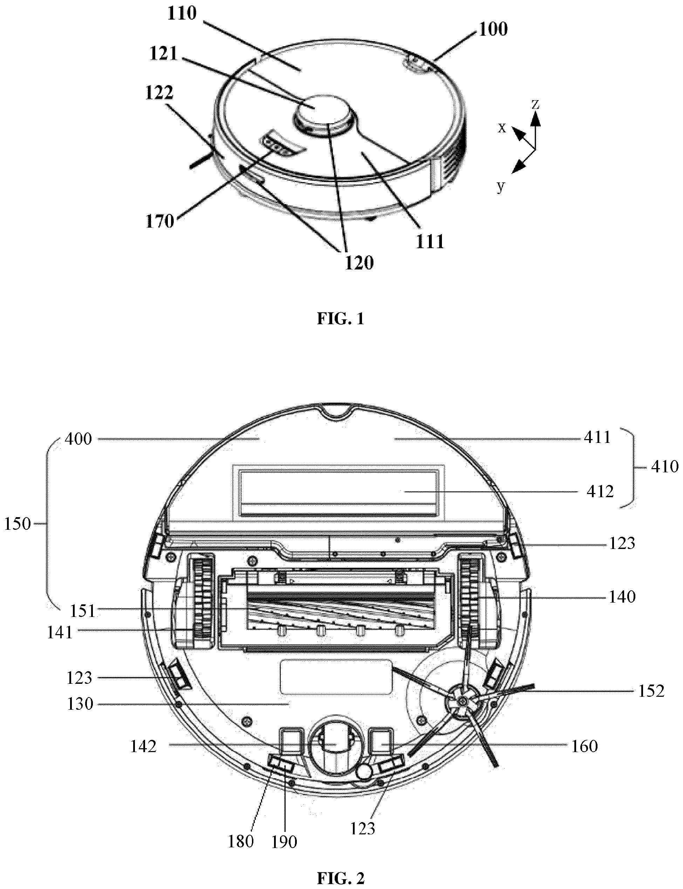

FIGs. 1-2 are schematic structural diagrams of an automatic cleaning apparatus according to an exemplary embodiment. As shown in FIGs. 1-2, the automatic cleaning apparatus may be a vacuuming robot, a sweeping/mopping/brushing/sweeping-mopping robot, or the like. The automatic cleaning apparatus may include a mobile platform 100, a perception system 120, a control system 130, a driving system 140, a cleaning module 150, an energy system 160 and a human-computer interaction system 170.

The mobile platform 100 may be configured to move automatically along a target direction on an operation surface. The operation surface may be a surface to be cleaned by the automatic cleaning apparatus. In some embodiments, the automatic cleaning apparatus may be a self-moving robot such as a mopping robot, a sweeping robot, or a sweeping-mopping robot, in which case the automatic cleaning apparatus operates on the ground, and the ground may also be any operation surface, for example, a table top, a roof, a platform, or the like. The automatic cleaning apparatus may also be a window cleaning robot, in which case the automatic cleaning apparatus operates on an outer surface of glass of a building, and the glass serves as the operation surface. The automatic cleaning apparatus may also be a self-moving pipe robot, in which case the automatic cleaning apparatus operates on an inner surface of a pipe, and the inner surface of the pipe serves as the operation surface. For the purpose of presentation only, the following description in the present application takes a mopping robot as an example for illustration.

In some embodiments, the mobile platform 100 may be an autonomous mobile platform, or a non-autonomous mobile platform. The autonomous mobile platform refers to that the mobile platform 100 itself can automatically and adaptively make an operational decision based on an unexpected environmental input; and the non-autonomous mobile platform itself cannot adaptively make an operational decision based on an unexpected environmental input, but can execute a given program or operate according to a certain logic. Correspondingly, when the mobile platform 100 is the autonomous mobile platform, the target direction may be determined autonomously by the automatic cleaning apparatus; and when the mobile platform 100 is the non-autonomous mobile platform, the target direction may be set by a system or may be set manually. When the mobile platform 100 is the autonomous mobile platform, the mobile platform 100 includes a forward portion 111 and a rearward portion 110.

The perception system 120 includes a pose determining device 121 located on the mobile platform 100, a buffer 122 located in the forward portion 111 of the mobile platform 100, cliff sensors 123 located at the bottom of the mobile platform 100, a light receiving assembly 190 and sensor devices such as an ultrasonic sensor, an infrared sensor, a magnetometer, an accelerometer, a gyroscope, and an odometer, for providing various position information and motion state information of the automatic cleaning apparatus to the control system 130.

In order to describe behaviors of the automatic cleaning apparatus more clearly, directions are defined as follows: the automatic cleaning apparatus may travel on the ground by various combinations of movements relative to the following three mutually perpendicular axes defined by the mobile platform 100: a transversal axis X, a front-rear axis Y and a center vertical axis Z. A forward driving direction along the front-rear axis Y is designated as "forward", and a rearward driving direction along the front-rear axis Y is designated as "rearward". The transversal axis X extends substantially between a right wheel and a left wheel of the automatic cleaning apparatus along an axis center defined by a center point of a driving wheel assembly 141 in the driving system 140. The automatic cleaning apparatus may rotate around the X axis. It is referred to as "pitch up" when the forward portion of the automatic cleaning apparatus is tilted upward and the rearward portion of the same is tilted downward, and it is referred to as "pitch down" when the forward portion of the automatic cleaning apparatus is tilted downward and the rearward portion of the same is tilted upward. In addition, the automatic cleaning apparatus may rotate around the Z axis. In a forward direction of the automatic cleaning apparatus, it is referred to as "turn right" when the automatic cleaning apparatus is tilted to the right of the y axis, and it is referred to as "turn left" when the automatic cleaning apparatus is tilted to the left of the y axis.

As shown in FIG. 2, the cliff sensors 123 are provided at the bottom of the mobile platform 100 and in front and rear of the driving wheel assembly 141, respectively, for preventing the automatic cleaning apparatus from falling off when the automatic cleaning apparatus is moving forward or backward, so as to avoid a damage to the automatic cleaning apparatus. The aforementioned "front" refers to a side in the same direction as the travelling direction of the automatic cleaning apparatus, and the aforementioned "rear" refers to a side in a direction opposite to the travelling direction of the automatic cleaning apparatus.

The pose determining device 121 includes, but is not limited to, a device capable of determining the position or attitude of the automatic cleaning apparatus such as a camera, a laser distance measuring device (LDS), a line structured light device, or an Optical Dissolved Oxygen (ODO) sensor. The pose determining apparatus 121 is also not limited to being located on the top of the automatic cleaning apparatus. For example, the camera and the line structured light device may be disposed at any position on the front or the side of the automatic cleaning apparatus as desired; the ODO sensor may be disposed inside the automatic cleaning apparatus.

Various components in the perception system 120 may operate independently, or operate together to achieve an intended function more accurately. The surface to be cleaned is identified by the light receiving assembly 190 to determine the physical characteristics (including a material, a stain category or the like) of the surface to be cleaned.

For example, a spectrum acquisition unit 191 may determine whether the surface to be cleaned is a carpet. If the spectrum acquisition unit 191 determines that the surface to be cleaned is made of a carpet material, the control system 130 controls the automatic cleaning apparatus to perform cleaning in a carpet mode.

The forward portion 111 of the mobile platform 100 is provided with the buffer 122. During cleaning, when the driving wheel assembly 141 propels the automatic cleaning apparatus to travel on the ground, the buffer 122 detects one or more events (or objects) in a travelling path of the automatic cleaning apparatus via a sensor system, e.g., an infrared sensor, and the automatic cleaning apparatus may control the driving wheel assembly 141 based on the event (or object), such as an obstacle or a wall, detected by the buffer 122 to cause the automatic cleaning apparatus to respond to the event (or object), for example, to move away from the obstacle.

The control system 130 is disposed on a main circuit board in the mobile platform 100, and includes a computing processor such as a central processing unit or an application processor, that communicates with a non-transitory memory such as a hard disk, a flash memory or a random-access memory. The application processor is configured to receive environmental information sensed by the plurality of sensors and transmitted from the perception system 120, to draw a simultaneous map of an environment where the automatic cleaning apparatus is located using a positioning algorithm e.g., simultaneous localization and mapping (SLAM), based on obstacle information fed back by the LDS, and to autonomously determine a travelling path based on the environmental information and the environmental map, and then control the driving system 140 to perform operations, such as travelling forward, travelling backward, and/or steering based on the autonomously determined travelling path. Further, the control system 130 may also determine whether to activate the cleaning module 150 to perform a cleaning operation based on the environmental information and the environmental map.

Specifically, the control system 130 may, in combination with distance information or speed information which is fed back by the buffer 122, the cliff sensors 123 and the sensor devices such as the ultrasonic sensor, the infrared sensor, the magnetometer, the accelerometer, the gyroscope and the odometer, comprehensively determine a current operation state of the sweeping robot, such as crossing a doorsill, getting on a carpet, locating at an edge of a cliff, being stuck from above or below, having a full dust box or being picked up, and may also give specific next-step action strategies for different situations, such that the operation of the automatic cleaning apparatus is more in line with requirements of an owner and provides better user experience. Further, the control system can plan the most efficient and reasonable cleaning path and cleaning mode based on the simultaneous map drawn by the SLAM, which greatly improves the cleaning efficiency of the automatic cleaning apparatus.

The driving system 140 may execute a driving command based on specific distance and angle information, such as x, y, and theta components, to manipulate the automatic cleaning apparatus to travel across the ground. The driving system 140 includes a driving wheel assembly 141, and can control both the left and right wheels. In order for the automatic cleaning apparatus to move on the ground more stably or have a stronger movement ability, the automatic cleaning apparatus may include one or more steering assemblies 142, which may be driven wheel(s) or driving wheel(s) and have a structural form including but not limited to universal wheel(s). The steering assembly 142 may be located in front of the driving wheel assembly 141.

The energy system 160 includes a rechargeable battery, for example, a nickel-hydride battery and a lithium battery. The rechargeable battery may be connected with a charging control circuit, a battery pack charging temperature detecting circuit and a battery undervoltage monitoring circuit, and the charging control circuit, the battery pack charging temperature detecting circuit and the battery undervoltage monitoring circuit are then connected to a single-chip microcomputer control circuit. The automatic cleaning apparatus is connected to a charging station through a charging electrode disposed on a side of or below a body of the automatic cleaning apparatus for charging.

The human-computer interaction system 170 includes buttons disposed on a panel of the automatic cleaning apparatus for a user to select functions. The human-computer interaction system 170 may further include a display screen and/or an indicator light and/or a horn that present(s) a current state or function option of the automatic cleaning apparatus to the user. The human-computer interaction system 170 may further include a mobile client program. For the automatic cleaning apparatus of the route navigation type, a mobile client may present a map of the environment where the automatic cleaning apparatus is located and a position of the automatic cleaning apparatus to the user, and may provide richer and more user-friendly function items to the user, such that the user can configure the cleaning parameters of the automatic cleaning apparatus through the mobile client.

The cleaning module 150 may include a dry cleaning module 151 and/or a wet cleaning module 400. As shown in FIG. 2, the dry cleaning module 151 includes a rolling brush, a dust box, a fan and an air outlet. The rolling brush having a certain interference with the ground sweeps up garbage on the ground and rolls up the garbage to the front of a dust suction inlet between the rolling brush and the dust box, and then the garbage is sucked into the dust box by air having a suction force, which is generated by the fan and passes through the dust box. The dust removal capacity of the automatic cleaning apparatus may be characterized by a dust pickup efficiency (DPU) for the garbage. The DPU is affected by the structure and material of the rolling brush, by the utilization rate of the air in an air channel formed by the dust suction inlet, the dust box, the fan, the air outlet and the connecting components therebetween, and by the type and power of the fan, which is a complex systematic design problem. Compared to an ordinary plug-in vacuum cleaner, the improvement of the dust removal capacity is more meaningful for an automatic cleaning apparatus with limited energy because the improvement of the dust removal capacity directly and effectively reduces requirements for energy, that is, the original cleaning apparatus capable of cleaning 80 square meters of the ground with charging for once may be evolved to clean 180 square meters or more with charging for once. Furthermore, the service life of the battery with the reduced number of charging times will also be greatly increased, such that the frequency of replacing the battery by the user will also be decreased accordingly. More intuitively and importantly, the improvement of the dust removal capacity contributes to the most obvious and important user experience, as the user will directly come to a conclusion of whether the thorough cleaning is achieved. The dry cleaning module may further include a side brush 152 having a rotary shaft angled relative to the ground, for moving debris into a region of the rolling brush of the dry cleaning module 151.

The wet cleaning module 400 according to embodiments of the present invention is configured to clean at least a part of the operation surface by means of wet cleaning. The wet cleaning module 400 includes a cleaning head 410 and a driving unit 420. The cleaning head 410 is used for cleaning at least a part of the operation surface, and the driving unit 420 is used for driving the cleaning head to reciprocate along a surface to be cleaned, which is part of the operation surface. The cleaning head 410 reciprocates along the surface to be cleaned, and a surface of the cleaning head 410 in contact with surface to be cleaned is provided with a cleaning cloth or a cleaning plate, which causes a high-frequency friction with the surface to be cleaned through reciprocating motion, thereby removing stains from the surface to be cleaned. The cleaning head 410 includes a movable region 412 and a fixed region 411, and the movable region 412 is disposed at a substantially central position of the cleaning head 410.

Embodiments of the present disclosure provide an automatic cleaning apparatus, which as shown in FIG. 2 includes a mobile platform 100; a cleaning module 150, provided at bottom of the mobile platform 100 for cleaning an operation surface on a travelling path of the automatic cleaning apparatus. The automatic cleaning apparatus according to embodiments of the present disclosure further includes a light emitting assembly 180, provided on a bottom surface of the mobile platform 100 and configured to emit light signals within a predetermined angle range towards a direction of the operation surface; a light receiving assembly 190, including a spectrum acquisition unit 191 and configured to receive light signals reflected from the operation surface and generate spectral information based on the operation surface; and a control system 130, provided inside the mobile platform 100 and configured to determine a material and/or stain category of the operation surface based at least on the spectral information, and control, based on the material and/or stain category of the operation surface, the cleaning module 150 to clean the operation surface.

In some embodiments, as shown in FIG. 2, the light emitting assembly 180 should be disposed at the bottom of the automatic cleaning apparatus near a forward edge position, so as to detect as early as possible the material or stain condition of the operation surface. The light emitting assembly 180 includes an invisible light emitting unit 181 and a visible light emitting unit 182, and the invisible light emitting unit 181 and the visible light emitting unit 182 emit invisible light signals and visible light signals, respectively, at a predetermined angle. Here, the invisible light emitting unit 181 is, for example, an infrared emitting unit.

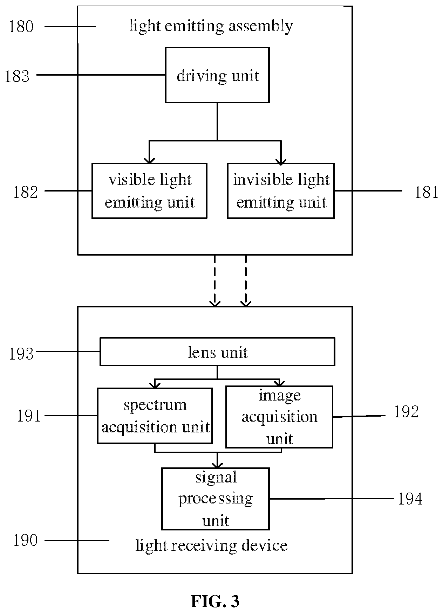

As shown in FIG. 3, the light emitting assembly 180 includes a driving unit 183 for providing a suitable driving voltage and driving current to the invisible light emitting unit 181 and the visible light emitting unit 182 for photoelectric conversion. The light-emitting intensity and the driving current of the invisible light emitting unit 181 and the visible light emitting unit 182 are linearly related, and thus the magnitude of the light intensity and the irradiation range of the light emitting assembly 180 can be effectively controlled by controlling the driving current.

The light emitting assembly 180 includes an invisible light emitting unit 181 and a visible light emitting unit 182, and the wavelength range of the light emitting assembly 180 may be, for example, 380 nm to 1100 nm. The light-emitting intensity of the invisible light emitting unit 181 and the visible light emitting unit 182 affects the sensing distance. Therefore, the current should be controlled properly, such that the light signals emitted by the light emitting assembly 180 still have enough energy to be reflected back to the light receiving assembly after irradiating the operation surface; and the divergence angle of the light emitting assembly 180 affects the light radiation range, for example, a divergence angle range of 30° to 90° allows for irradiation of the operation surface in front of the automatic cleaning apparatus, making it possible to pre-determine the material or stain category of the region in front during the execution of the cleaning operation. According to the actual need for sensing range of the automatic cleaning apparatus, in this embodiment, a white LED with a wavelength range of 380 nm to 780 nm is combined with an infrared LED with a wavelength range of 780 nm to 1100 nm to achieve broad-spectrum complementary lighting, which can cover the irradiation region in a range of 30° at the bottom. The external dimensions of the light emitting assembly 180 mainly affect the structural design, and in this embodiment, 3535 package surface mounted devices (SMDs) may be used.

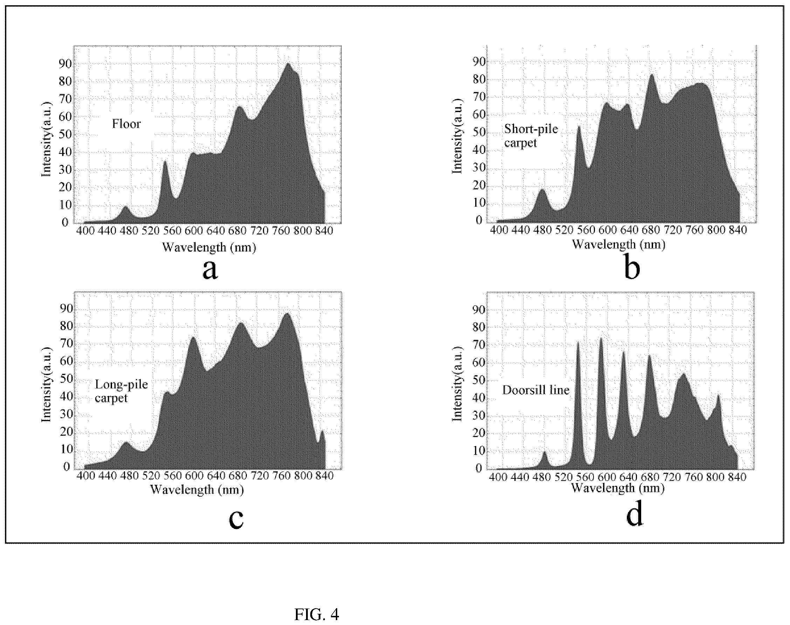

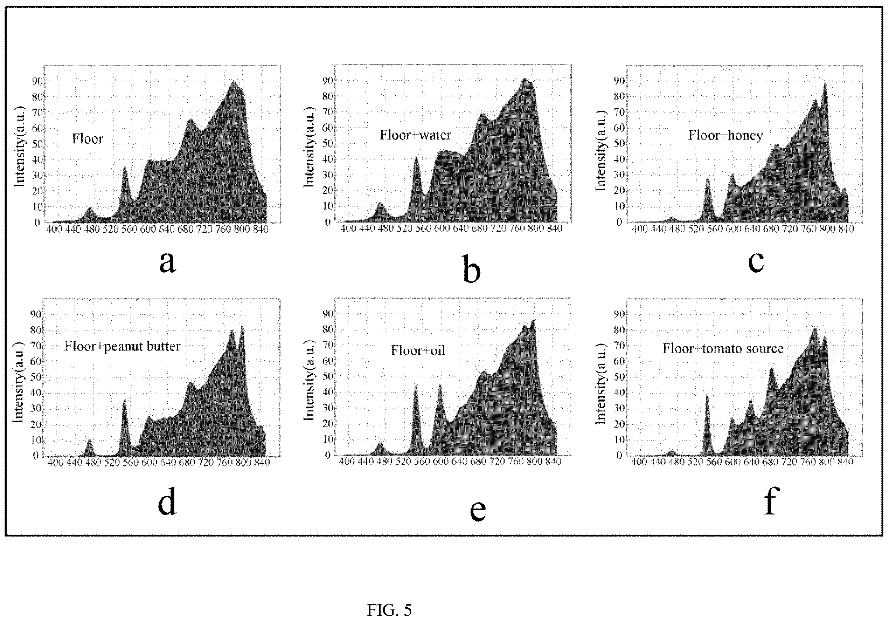

In some embodiments, the light receiving assembly 190 includes a spectrum acquisition unit 191 configured to receive light signals reflected from the operation surface and generate spectral information based on the operation surface. The spectral information based on the operation surface includes spectral information based on the material of the operation surface or spectral information based on the stain category of the operation surface. For example, as shown in the spectral information in FIGs. 4 and 5, the horizontal axis indicates the spectral wavelength, the vertical axis indicates the light intensity, and the spectral information includes: floor spectral information, short-pile carpet spectral information, long-pile carpet spectral information, doorsill line spectral information, water stain spectral information, honey spectral information, peanut butter spectral information, oil spectral information, and tomato sauce spectral information, respectively.

In some embodiments, the light receiving assembly 190 further includes an image acquisition unit 192 configured to receive light signals reflected from the operation surface and to generate a photographic image based on the operation surface. The photographic image based on the operation surface includes a photographic image based on the material of the operation surface or a photographic image based on the stain category of the operation surface. The photographic image is, for example, a photograph of the material of the operation surface or a photograph based on the stain category of the operation surface as acquired by direct photography. For example, the photographic image includes at least one of the following: a floor photographic image, a short-pile carpet photographic image, a long-pile carpet photographic image, a doorsill line photographic image, a water stain photographic image, a honey photographic image, a peanut butter photographic image, an oil photographic image, or a tomato sauce photographic image.

As shown in FIG. 3, the light receiving assembly 190 includes a lens unit 193, a spectrum acquisition unit 191, an image acquisition unit 192, and a signal processing unit 194. The lens unit 193 is configured to collect the light reflected after being emitted by the light emitting assembly 180 to the ground, such that even weak reflected light may also be collected into the optical sensing regions of the spectrum acquisition unit 191 and the image acquisition unit 192, which enhances the sensitivity of the device. In this embodiment, a combination of high-resolution lenses with a horizontal DFOV = 30° is used. The spectrum acquisition unit 191 and the image acquisition unit 192 are configured to collect spectral data and image data, respectively, with a response wavelength range of 380 nm to 1100 nm and a resolution of 1 nm.

The signal processing unit 194 is used to convert the photoelectric signals of the spectrum acquisition unit 191 and the image acquisition unit 192 into digital signals which are then transmitted to the control system, such as a CPU, of the automatic cleaning apparatus for AI intelligent comparison. The transmission frame rate should be as high as possible, and may be, for example, ≥ 15 fps, to allow for a quick response to material identification and for the automatic cleaning apparatus to quickly adjust a cleaning strategy.

In some embodiments, the automatic cleaning apparatus further includes a storage device configured to pre-store historical spectral information and/or historical photographic images based on the material and/or stain category of the operation surface. Specifically, the material of the operation surface may include: a hard ground material and a soft ground material; the hard ground material may further include a floor, a floor tile, etc.; and the soft ground material includes a short-pile carpet, a long-pile carpet, etc. As shown in FIGs. 4 and 5, the historical spectral information includes at least one of the following: floor spectral information, short-pile carpet spectral information, long-pile carpet spectral information, doorsill line spectral information, water stain spectral information, honey spectral information, peanut butter spectral information, oil spectral information, or tomato sauce spectral information, respectively. The historical photographic image includes at least one of the following: a floor photographic image, a short-pile carpet photographic image, a long-pile carpet photographic image, a doorsill line photographic image, a water stain photographic image, a honey photographic image, a peanut butter photographic image, an oil photographic image, or a tomato sauce photographic image. The automatic cleaning apparatus may store the various specific historical spectral information and/or historical photographic images described above into the storage device by data acquisition or precompilation for subsequent invoking. Of course, the various specific historical spectral information and/or historical photographic images described above may also be stored in a cloud or server for invoking by the automatic cleaning apparatus.

In some embodiments, the automatic cleaning apparatus further includes a storage device, configured to pre-store a learning model of spectral information and/or a learning model of photographic image based on the material and/or stain category of the operation surface; and the control system is further configured to identify, using the learning model of spectral information and/or the learning model of photographic image based on the material and/or stain category of the operation surface as stored by the storage device, the spectral information and/or the photographic image received by the light receiving assembly to determine the material and/or stain category of the operation surface. By pre-storing the learning model, rapid identification of the material and/or stain category of the operation surface can be achieved.

In some embodiments, the control system 130, such as a CPU, is configured to determine the material and/or stain category of the operation surface based on the spectral information. The spectral range of 380 nm to 1100 nm covers the wavelength ranges of visible light and infrared light, and the spectrometer usually has a high sensitivity, Thus, the corresponding waveform image may be obtained even if the reflected light is weaker. Therefore, the spectral information as obtained is usually complete, and as shown in FIGs. 4 and 5, different reflectivity is obtained for different materials or different stain categories, such that stable spectral contour lines can be formed. Therefore, the spectral situation of the current region where the operation surface is photographed can be obtained more accurately, and a more accurate determination can be made with respect to the material and/or stain category of the operation surface of the current region.

In some embodiments, the further determination process of the control system is as follows: comparing current spectral information formed via the light receiving assembly with the historical spectral information stored by the storage device, and when a matching degree between the current spectral information and the historical spectral information is greater than or equal to a first predetermined threshold, determining that a current material and/or stain category of the operation surface is the material and/or stain category of the operation surface corresponding to the historical spectral information.

Comparing the current spectral information formed via the light receiving assembly with the historical spectral information stored by the storage device includes comparing contour lines for a matching degree. For example, peak values or valley values at a corresponding wavelength may be compared, or peak values or valley values within a corresponding wavelength range may be compared. When a predetermined threshold is satisfied, for example, with a matching degree of 80%-90%, it is deemed that the current spectral information is matched with the historical spectral information, and it is determined that the current material and/or stain category of the operation surface is the material and/or stain category of the operation surface corresponding to the historical spectral information.

In some embodiments, comparing the current spectral information formed via the light receiving assembly with the historical spectral information stored by the storage device may also include: flattening the spectral information to form a one-dimensional feature vector; calculating an Euclidean distance between the one-dimensional feature vector of the current spectral information and the one-dimensional feature vector of the historical spectral information as stored in the storage device; searching for the historical spectral information in the storage device corresponding to a one-dimensional feature vector having the smallest Euclidean distance from the one-dimensional feature vector of the current spectral information; when a predetermined threshold is satisfied, determining that the current spectral information is matched with the historical spectral information, and determining that the current material and/or stain category of the operation surface is the material and/or stain category of the operation surface corresponding to the historical spectral information.

Further, in some embodiments, the control system is configured to determine the material and/or stain category of the operation surface based on the spectral information and the photographic image obtained by the light receiving assembly. Specifically, in some embodiments, the current photographic image formed via the light receiving assembly is compared with the historical photographic image stored by the storage device when the matching degree between the current spectral information and the historical spectral information is less than the first predetermined threshold and greater than or equal to a second predetermined threshold.

As described above, the current spectral information and the historical spectral information are compared firstly, and when the matching degree is greater than or equal to a first threshold, for example, greater than or equal to 80%, the material and/or stain category of the operation surface of the current operation surface is determined directly from the historical spectral information. When the matching degree is less than a first threshold and greater than or equal to a sufficient second threshold, for example, the matching degree is 70% and greater than or equal to a second threshold of 60%, the material and/or stain category of the operation surface of the current operation surface may be further determined based on the historical photographic image. When the matching degree between the current photographic image and the historical photographic image is greater than or equal to a third predetermined threshold, for example, the photographic image matching degree is greater than or equal to a third threshold of 80%, it is determined that the current material and/or stain category of the operation surface is the material and/or stain category of the operation surface corresponding to the historical photographic image. By this method, it is possible to further determine the material and/or stain category of the operation surface under the assistance of the photographic image in the case where the material and/or stain category of the operation surface cannot be completely determined by means of the spectral information, which further improves the accuracy in determining the material and/or stain category of the operation surface.

After determining the material and/or stain category of the operation surface, the control system controls, using a corresponding cleaning strategy based on the material and/or stain category of the operation surface, the cleaning module to clean the operation surface. Specifically, the cleaning strategy includes, but is not limited to, the following examples.

When it is identified that the material of the operation surface is a hard ground material, a conventional cleaning strategy is applied, for example, sweeping with normal power or mopping with a normal amount of water.

When it is identified that the material of the operation surface is a short-pile carpet, only sweeping is implemented without implementing the mopping function to avoid wetting the carpet.

When it is identified that the material of the operation surface is a long-pile carpet, no cleaning is performed on the current region, and the control system controls the driving system to implement a bypass to avoid trapping of the automatic cleaning apparatus by the long-pile carpet.

When it is identified that the material is of a step ground structure, for example, a doorsill line, cleaning of a doorsill line region is suspended.

When it is identified that water is present on the operation surface, the dry cleaning module is controlled to stop working and/or to reduce the amount of water discharged during mopping by the automatic cleaning apparatus to avoid leaving more water stains on the floor.

When it is identified that heavy stains such as oil, tomato sauce or peanut butter are on the operation surface, the amount of water supplied by the cleaning apparatus is increased and the concentration of the cleaning agent is increased during the mopping; and in addition, the mopping strength or vibration frequency of the wet cleaning module may be increased to remove the stains as much as possible.

According to the embodiments of the present disclosure, the material and/or stain category of the operation surface is acquired by providing a spectrometer and/or an image imaging assembly at the bottom of the automatic cleaning apparatus, and the cleaning module is controlled to clean the operation surface based on the material and/or stain category of the operation surface, thereby achieving identification of the soft ground, hard ground and stain type and targeted cleaning.

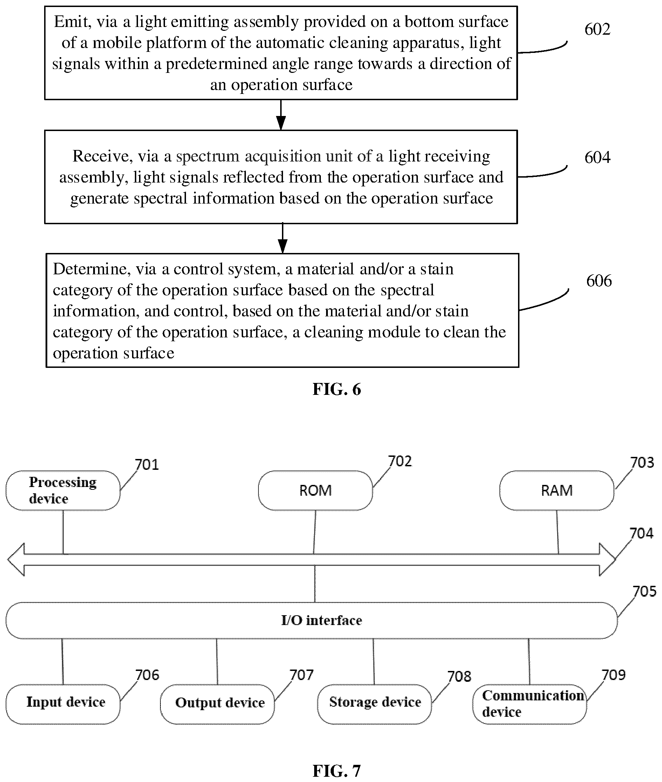

Embodiments of the present disclosure further provide a method for controlling an automatic cleaning apparatus, which is applied to the automatic cleaning apparatus as described in the above embodiments, with the same features having the same technical effect, which will not be repeated herein. As shown in FIG. 6, the method specifically includes the following steps:

In step S602, via a light emitting assembly provided on a bottom surface of a mobile platform of the automatic cleaning apparatus, light signals are emitted within a predetermined angle range towards a direction of an operation surface.

In step S604, light signals reflected from the operation surface are received via a spectrum acquisition unit of a light receiving assembly, and spectral information is generated based on the operation surface.

In step S606, a material and/or stain category of the operation surface is determined via a control system based on the spectral information, and the cleaning module is controlled to clean the operation surface based on the material and/or stain category of the operation surface.

In some embodiments, the light emitting assembly includes an invisible light emitting unit and a visible light emitting unit, and the invisible light emitting unit and the visible light emitting unit emit invisible light signals and visible light signals, respectively, at a predetermined angle.

In some embodiments, the light emitting assembly further includes a driving unit, and the method further includes: adjusting a driving current or voltage in the driving unit based on the spectral information to adjust the intensity and/or a predetermined angle at which the invisible light emitting unit and visible light emitting unit emit light signals.

In some embodiments, the light receiving assembly further includes an image acquisition unit, and the method further includes receiving light signals reflected from the operation surface and generating a photographic image based on the operation surface.

In some embodiments, the method further includes: determining the material and/or material surface stain category of the operation surface based on the spectral information and the photographic image, and based on the material and/or material surface stain category of the operation surface, controlling the cleaning module to clean the operation surface.

In some embodiments, the method further includes: pre-storing historical spectral information and/or historical photographic images based on the material and/or material surface stain category of the operation surface.

In some embodiments, the method further includes: comparing current spectral information formed via the light receiving assembly with the historical spectral information stored by the storage device, and when a matching degree between the current spectral information and the historical spectral information is greater than or equal to a first predetermined threshold, determining that the current material and/or material surface stain category of the operation surface is the material and/or material surface stain category of the operation surface corresponding to the historical spectral information.

In some embodiments, the method further includes: comparing a current photographic image formed via the light receiving assembly with a historical photographic image stored by the storage device when the matching degree between the current spectral information and the historical spectral information is less than the first predetermined threshold and greater than or equal to a second threshold; and

determining that the current material and/or material surface stain category of the operation surface is the material and/or material surface stain category of the operation surface corresponding to the historical photographic image when the matching degree between the current photographic image and the historical photographic image is greater than or equal to a third predetermined threshold.

In some embodiments, the historical spectral information includes at least one of the following: floor spectral information, short-pile carpet spectral information, long-pile carpet spectral information, doorsill line spectral information, water stain spectral information, honey spectral information, peanut butter spectral information, oil spectral information, or tomato sauce spectral information, respectively.

The historical photographic images include at least one of the following: a floor photographic image, a short-pile carpet photographic image, a long-pile carpet photographic image, a doorsill line photographic image, a water stain floor photographic image, a honey floor photographic image, a peanut butter floor photographic image, an oil floor photographic image, or a tomato sauce floor photographic image.

In some embodiments, the light emitting assembly includes an invisible light emitting unit and/or a visible light emitting unit, and the invisible light emitting unit and/or the visible light emitting unit emit(s) invisible light signals and/or visible light signals correspondingly within the predetermined angle range towards the direction of the operation surface, respectively.

In some embodiments, the light emitting assembly includes a driving unit, and the control system is further configured to adjust a driving current or voltage in the driving unit based on the generated spectral information to adjust an intensity and/or predetermined angle of the light signals emitted by the light emitting assembly.

In some embodiments, the light receiving assembly further includes an image acquisition unit configured to receive light signals reflected from the operation surface and to generate a photographic image based on the operation surface.

In some embodiments, the control system is configured to determine a material and/or stain category of the operation surface based on the spectral information and the photographic image, and control, based on the material and/or stain category of the operation surface, the cleaning module to clean the operation surface.

In some embodiments, the automatic cleaning apparatus further includes:
a storage device configured to pre-store historical spectral information and/or historical photographic images based on the material and/or stain category of the operation surface.

In some embodiments, the control system is further configured to:
compare current spectral information formed via the light receiving assembly with the historical spectral information stored by the storage device, and when a matching degree between the current spectral information and the historical spectral information is greater than or equal to a first predetermined threshold, determine that a current material and/or stain category of the operation surface is a material and/or stain category of the operation surface corresponding to the historical spectral information.

In some embodiments, the control system is further configured to:
compare a current photographic image formed via the light receiving assembly with a historical photographic image stored by the storage device when the matching degree between the current spectral information and the historical spectral information is less than the first predetermined threshold and greater than or equal to a second predetermined threshold; and
determine that the current material and/or stain category of the operation surface is the material and/or stain category of the operation surface corresponding to the historical photographic image when the matching degree between the current photographic image and the historical photographic image is greater than or equal to a third predetermined threshold.

In some embodiments, the automatic cleaning apparatus further includes:
a storage device, configured to pre-store a learning model of spectral information and/or a learning model of photographic image based on the material and/or stain category of the operation surface; and
the control system is further configured to identify, using the learning model of spectral information and/or the learning model of photographic image based on the material and/or stain category of the operation surface as stored by the storage device, the spectral information and/or the photographic image received by the light receiving assembly to determine the material and/or stain category of the operation surface.

The control system is further configured to:
flatten the current spectral information formed by the light receiving assembly to form a one-dimensional feature vector;
calculate an Euclidean distance between the one-dimensional feature vector of the current spectral information and a one-dimensional feature vector of historical spectral information stored by the storage device; and
when the Euclidean distance satisfies a predetermined distance threshold, determine that the current spectral information matches with the historical spectral information, and determine that the current material and/or stain category of the operation surface is the material and/or stain category of the operation surface corresponding to the historical spectral information.

In some embodiments, the light emitting assembly has a wavelength ranging from 380 to 1100 nm.

In some embodiments, the predetermined angle range is from 30° to 90°.

In some embodiments, the light receiving assembly has a resolution of 1 nm.

Embodiments of the present disclosure provide a method for controlling an automatic cleaning apparatus, including:
emitting, via a light emitting assembly provided on a bottom surface of a mobile platform of the automatic cleaning apparatus, light signals within a predetermined angle range towards a direction of an operation surface;
receiving, via a light receiving assembly, light signals reflected from the operation surface and generating spectral information based on the operation surface; and
determining, via a control system, a material and/or stain category of the operation surface based on the spectral information, and controlling, based on the material and/or stain category of the operation surface, the cleaning module to clean the operation surface.

In some embodiments, the light emitting assembly includes an invisible light emitting unit and/or a visible light emitting unit, and the invisible light emitting unit and/or the visible light emitting unit emit(s) invisible light signals and/or visible light signals correspondingly within the predetermined angle range towards the direction of the operation surface, respectively.

In some embodiments, the light emitting assembly further includes a driving unit, and the method further includes:
adjusting a driving current or voltage in the driving unit based on generated spectral information to adjust an intensity and/or predetermined angle of the light signals emitted by the light emitting assembly.

In some embodiments, the light emitting assembly further includes an image acquisition unit, and the method further includes:
receiving a light signal reflected from the operation surface and generating a photographic image based on the operation surface.

In some embodiments, the method further includes:
determining a material and/or stain category of the operation surface based on the spectral information and the photographic image, and based on the material and/or stain category of the operation surface, controlling the cleaning module to clean the operation surface.

In some embodiments, the method further includes:
pre-storing historical spectral information and/or historical photographic images based on the material and/or stain category of the operation surface.

In some embodiments, the method further includes:
comparing current spectral information formed via the light receiving assembly with the historical spectral information stored by the storage device, and when a matching degree between the current spectral information and the historical spectral information is greater than or equal to a first predetermined threshold, determining that a current material and/or stain category of the operation surface is a material and/or stain category of the operation surface corresponding to the historical spectral information.

In some embodiments, the method further includes:
comparing a current photographic image formed via the light receiving assembly with a historical photographic image stored by the storage device when the matching degree between the current spectral information and the historical spectral information is less than the first predetermined threshold and greater than or equal to a second predetermined threshold; and
determining that the current material and/or stain category of the operation surface is the material and/or stain category of the operation surface corresponding to the historical photographic image when the matching degree between the current photographic image and the historical photographic image is greater than or equal to a third predetermined threshold.

In some embodiments, the method further includes: identifying, via the automatic cleaning apparatus using the learning model of spectral information and/or the learning model of photographic image based on the material and/or stain category of the operation surface as pre-stored by the storage device, the spectral information and/or the photographic image as received to determine the material and/or stain category of the operation surface.

In some embodiments, the method further includes:
flattening the current spectral information formed by the light receiving assembly to form a one-dimensional feature vector;
calculating an Euclidean distance between the one-dimensional feature vector of the current spectral information and a one-dimensional feature vector of historical spectral information stored by the storage device; and
when the Euclidean distance satisfies a predetermined distance threshold, determining that the current spectral information matches with the historical spectral information, and determining that the current material and/or stain category of the operation surface is the material and/or stain category of the operation surface corresponding to the historical spectral information.

In some embodiments, controlling, based on the material and/or stain category of the operation surface, the cleaning module to clean the operation surface includes at least one of the following:
when the material of the operation surface is a hard ground material, performing sweeping with a predetermined power and/or mopping with a predetermined amount of water;
when the material of the operation surface is a short-pile carpet, performing sweeping on the short-pile carpet and/or stopping mopping;
when the material of the operation surface is a long-pile carpet, controlling the driving system to implement a bypass;
when water is present on the operation surface, controlling a dry cleaning module to stop working and/or reducing the amount of water discharged by the automatic cleaning apparatus during mopping; and
when a heavy stain is present on the operation surface, performing at least one of the following operations: increasing an amount of water supplied by the cleaning apparatus, increasing a concentration of a cleaning agent, and increasing a mopping strength or vibration frequency of a wet cleaning module.

Embodiments of the present disclosure provide a non-transitory computer-readable storage medium storing computer program instructions therein, and the computer program instructions, when invoked and executed by a processor, implement steps of any of the aforesaid methods.

Embodiments of the present disclosure provide an automatic cleaning apparatus, including a processor and a memory, the memory stores computer program instructions capable of being executed by the processor, and the processor, when executing the computer program instructions, implements steps of the method according to any of the aforesaid embodiments.

Embodiments of the present disclosure can solve the technical problem with accurate identification of ground materials or key regions.

The technical effects of the embodiments of the present disclosure are as follows.
according to the embodiments of the present disclosure, the material of the operation surface and/or the stain category on the surface of such a material are/is acquired by providing a spectrometer and/or an image imaging assembly at the bottom of the automatic cleaning apparatus, and the cleaning module is controlled to clean the operation surface based on the material of the operation surface and/or the stain category on the surface of such a material, thereby achieving identification of the carpet, floor and stain category and then targeted cleaning.

As shown in FIG. 7, the automatic cleaning apparatus may include a processing device (e.g., a central processor, a graphics processor, etc.) 701 that may perform a variety of appropriate actions and processing based on a program stored in a read-only memory (ROM) 702 or loaded from a storage device 708 into a random-access memory (RAM) 703. The RAM 703 further stores various programs and data required for the operation of the automatic cleaning apparatus. The processing device 701, ROM 702, and RAM 703 are connected to each other via a bus 704. An input/output (I/O) interface 705 is also connected to the bus 704.

Typically, the following devices may be connected to the I/O interface 705: an input device 706 including, for example, a touch screen, a touch pad, a keyboard, a mouse, a camera, a microphone, an accelerometer, a gyroscope, and the like; an output device 707 including, for example, a liquid crystal display (LCD), a loudspeaker, a vibrator, and the like; a storage device 708 including, for example, a hard disk, and the like; and a communication device 709. The communication device 709 may allow the electronic apparatus to communicate wirelessly or wiredly with other apparatuses to exchange data. Although FIG. 7 illustrates the electronic apparatus with various devices, it should be understood that it is not required to implement or have all of the illustrated devices; and more or fewer devices may alternatively be implemented or included.

The flowcharts and block diagrams in the accompanying drawings illustrate the architecture, functionality, and operation as possibly achieved by the system, method, and computer program product according to various embodiments of the present disclosure. At this point, each block in the flowchart or block diagram may represent a module, program segment, or a portion of code, and the module, the program segment, or the portion of code includes one or more executable instructions for implementing a specified logical function. It should be noted that, in some alternative implementations, the functions indicated in the blocks may also occur in an order different from the order indicated in the accompanying drawings. For example, two blocks represented one after the other may be actually executed substantially in parallel, and they may sometimes be executed in the opposite order depending on the function as involved. It shall be noted that each block in the block diagram and/or flowchart and the combination of blocks in the block diagram and/or flowchart may be implemented with a dedicated hardware-based system that performs the specified function or action, or may be implemented with a combination of dedicated hardware and computer instructions.

Finally, it should be noted that various embodiments in the specification are described in a progressive manner, each embodiment focuses on the differences from other embodiments, and the same or similar parts among the various embodiments may refer to one another. Since the systems or devices disclosed in the embodiment correspond to the methods disclosed in the embodiments, they are described in a relatively simple manner, and for relevant description, reference may be made to the description of the method embodiments.

The above embodiments are provided only for the purpose of illustrating the technical solutions of the present disclosure and are not intended to limit the present disclosure. Although the present disclosure has been described in detail with reference to the foregoing embodiments, those of ordinary skills in the art should understand that, they can still make modifications to the technical solutions described in the foregoing embodiments or make equivalent substitutions to some of the technical features; and these modifications or substitutions do not deviate the essence of the corresponding technical solutions from the spirit and scope of the technical solutions of the various embodiments of the present disclosure.

## Claims

1. An automatic cleaning apparatus, comprising:
a mobile platform and a drive assembly;
a cleaning module, provided at bottom of the mobile platform for cleaning an operation surface on a travelling path of the automatic cleaning apparatus;
a light emitting assembly, provided on a bottom surface of the mobile platform and configured to emit light signals within a predetermined angle range towards a direction of the operation surface;
a light receiving assembly, comprising a spectrum acquisition unit and configured to receive light signals reflected from the operation surface and generate spectral information based on the operation surface; and
a control system, provided inside the mobile platform and configured to determine a material and/or a stain category of the operation surface based at least on the spectral information, and control, based on the material and/or stain category of the operation surface, the cleaning module to clean the operation surface.

2. The automatic cleaning apparatus according to claim 1, wherein the light emitting assembly comprises an invisible light emitting unit and/or a visible light emitting unit, and the invisible light emitting unit and/or the visible light emitting unit emit invisible light signals and/or visible light signals correspondingly within the predetermined angle range towards the direction of the operation surface, respectively.

3. The automatic cleaning apparatus according to claim 1, wherein the light emitting assembly comprises a driving unit, and the control system is further configured to adjust a driving current or voltage in the driving unit based on the generated spectral information to adjust an intensity and/or a predetermined angle of the light signals emitted by the light emitting assembly.

4. The automatic cleaning apparatus according to any one of claims 1 to 3, wherein the light receiving assembly further comprises an image acquisition unit configured to receive the light signals reflected from the operation surface and to generate a photographic image based on the operation surface.

5. The automatic cleaning apparatus according to claim 4, wherein the control system is configured to determine a material and/or a stain category of the operation surface based on the spectral information and the photographic image, and control, based on the material and/or stain category of the operation surface, the cleaning module to clean the operation surface.

6. The automatic cleaning apparatus according to claim 5, further comprising:
a storage device configured to pre-store historical spectral information and/or historical photographic images based on the material and/or stain category of the operation surface.

7. The automatic cleaning apparatus according to claim 6, wherein the control system is further configured to:
compare current spectral information formed via the light receiving assembly with the historical spectral information stored by the storage device, and when a matching degree between the current spectral information and the historical spectral information is greater than or equal to a first predetermined threshold, determine that a current material and/or stain category of the operation surface is a material and/or stain category of the operation surface corresponding to the historical spectral information.

8. The automatic cleaning apparatus according to claim 7, wherein the control system is further configured to:
compare a current photographic image formed via the light receiving assembly with a historical photographic image stored by the storage device, when the matching degree between the current spectral information and the historical spectral information is less than the first predetermined threshold and greater than or equal to a second predetermined threshold; and
determine that the current material and/or stain category of the operation surface is a material and/or stain category of the operation surface corresponding to the historical photographic image, when a matching degree between the current photographic image and the historical photographic image is greater than or equal to a third predetermined threshold.

9. The automatic cleaning apparatus according to claim 5, further comprising:
a storage device, configured to pre-store a learning model of spectral information and/or a learning model of photographic image based on the material and/or stain category of the operation surface; and
wherein the control system is further configured to, using the learning model of spectral information and/or the learning model of photographic image based on the material and/or stain category of the operation surface as stored by the storage device, identify the spectral information and/or the photographic image received by the light receiving assembly to determine the material and/or stain category of the operation surface.

10. The automatic cleaning apparatus according to claim 6, wherein the control system is further configured to:
flatten the current spectral information formed by the light receiving assembly to form a one-dimensional feature vector;
calculate an Euclidean distance between the one-dimensional feature vector of the current spectral information and a one-dimensional feature vector of the historical spectral information stored by the storage device; and
when the Euclidean distance satisfies a predetermined distance threshold, determine that the current spectral information matches with the historical spectral information, and determine that the current material and/or stain category of the operation surface is the material and/or stain category of the operation surface corresponding to the historical spectral information.

11. The automatic cleaning apparatus according to any one of claims 1 to 10, wherein the light emitting assembly has a wavelength range of 380 nm to 1100 nm.

12. The automatic cleaning apparatus according to any one of claims 1 to 11, wherein the predetermined angle range is 30° to 90°.

13. The automatic cleaning apparatus according to any one of claims 1 to 12, wherein the light receiving assembly has a resolution of 1 nm.

14. A method for controlling an automatic cleaning apparatus, comprising:
emitting, via a light emitting assembly provided on a bottom surface of a mobile platform of the automatic cleaning apparatus, light signals within a predetermined angle range towards a direction of an operation surface;
receiving, via a light receiving assembly, light signals reflected from the operation surface and generating spectral information based on the operation surface; and
determining, via a control system, a material and/or a stain category of the operation surface based on the spectral information, and controlling, based on the material and/or stain category of the operation surface, a cleaning module to clean the operation surface.

15. The method according to claim 14, wherein the light emitting assembly comprises an invisible light emitting unit and/or a visible light emitting unit, and the invisible light emitting unit and/or the visible light emitting unit emit invisible light signals and/or visible light signals correspondingly within the predetermined angle range towards the direction of the operation surface, respectively.

16. The method according to claim 14, wherein the light emitting assembly further comprises a driving unit, and the method further comprises:
adjusting a driving current or voltage in the driving unit based on the generated spectral information to adjust an intensity and/or a predetermined angle of the light signals emitted by the light emitting assembly.

17. The method according to any one of claims 14 to 16, wherein the light receiving assembly further comprises an image acquisition unit, and the method further comprises:
receiving the light signals reflected from the operation surface and generating a photographic image based on the operation surface.

18. The method according to claim 17, further comprising:
determining a material and/or stain category of the operation surface based on the spectral information and the photographic image, and controlling, based on the material and/or stain category of the operation surface, the cleaning module to clean the operation surface.

19. The method according to claim 18, further comprising:
pre-storing historical spectral information and/or historical photographic images based on the material and/or stain category of the operation surface.

20. The method according to claim 19, further comprising:
comparing current spectral information formed via the light receiving assembly with the historical spectral information stored by the storage device, and when a matching degree between the current spectral information and the historical spectral information is greater than or equal to a first predetermined threshold, determining that a current material and/or stain category of the operation surface is a material and/or stain category of the operation surface corresponding to the historical spectral information.

21. The method according to claim 20, further comprising:
comparing a current photographic image formed via the light receiving assembly with a historical photographic image stored by the storage device, when the matching degree between the current spectral information and the historical spectral information is less than the first predetermined threshold and greater than or equal to a second predetermined threshold; and
determining that the current material and/or stain category of the operation surface is the material and/or stain category of the operation surface corresponding to the historical photographic image, when the matching degree between the current photographic image and the historical photographic image is greater than or equal to a third predetermined threshold.

22. The method according to claim 14, further comprising:
identifying, via the automatic cleaning apparatus using a learning model of spectral information and/or a learning model of photographic image based on the material and/or stain category of the operation surface as pre-stored by the storage device, the spectral information and/or the photographic image as received to determine the material and/or stain category of the operation surface.

23. The method according to claim 14, further comprising:
flattening the current spectral information formed by the light receiving assembly to form a one-dimensional feature vector;
calculating an Euclidean distance between the one-dimensional feature vector of the current spectral information and a one-dimensional feature vector of the historical spectral information stored by the storage device; and
when the Euclidean distance satisfies a predetermined distance threshold, determining that the current spectral information matches with the historical spectral information, and determining that the current material and/or stain category of the operation surface is the material and/or stain category of the operation surface corresponding to the historical spectral information.

24. The method according to any one of claims 14 to 23, wherein controlling, based on the material and/or stain category of the operation surface, the cleaning module to clean the operation surface comprises at least one of the following:
when the material of the operation surface is a hard ground material, performing sweeping with a predetermined power and/or mopping with a predetermined amount of water;
when the material of the operation surface is a short-pile carpet, performing sweeping on the short-pile carpet and/or stopping mopping of the short-pile carpet;
when the material of the operation surface is a long-pile carpet, controlling a driving system to implement a bypass;
when water is present on the operation surface, controlling a dry cleaning module to stop working and/or reducing an amount of water discharged by the automatic cleaning apparatus during mopping; or
when a heavy stain is present on the operation surface, performing at least one of: increasing an amount of water supplied by the cleaning apparatus, increasing a concentration of a cleaning agent, or increasing a mopping strength or vibration frequency of a wet cleaning module.

25. An automatic cleaning apparatus, comprising a processor and a memory, wherein the memory stores computer program instructions executable by the processor, and when the computer program instructions are executed by the processor, steps of the method according to any one of claims 14 to 24 are implemented.

26. A non-transitory computer-readable storage medium storing computer program instructions therein, wherein when the computer program instructions are invoked and executed by a processor, steps of the method according to any one of claims 14 to 24 are implemented.
